# EUROPEAN PATENT SPECIFICATION

(11) **EP 2 974 168 B1**
(45) Date of publication and mention of the grant of the patent: **27.01.2021**
(21) Application number: 14714072.7
(22) Date of filing: 07.03.2014
(51) Int. Cl.: H04L 12/725, H04L 12/715, H04L 12/803, H04L 29/08, H04L 12/813, H04L 29/12

(54) **HIERARCHICAL RULE-BASED ROUTING SYSTEM**
REGELBASIERTES HIERARCHISCHES LEITWEGLENKUNGSSYSTEM
SYSTÈME DE ROUTAGE HIÉRARCHIQUE BASÉ SUR DES RÈGLES

(30) Priority: 14.03.2013 US 201361781924 P
(43) Date of publication of application: 20.01.2016
(73) Proprietor: Nomadix, Inc., Woodland Hills, CA 91367 (US)
(72) Inventor: SWIG, Allen, Martin, Agoura Hills, CA 91301 (US); OLSHANSKY, Vadim, Agoura Hills, CA 91301 (US); NORO, Raffaele, Agoura Hills, CA 91301 (US); MANSBERG, Michael, Barry, Agoura Hills, CA 91301 (US); KEANEY, Michael, Agoura Hills, CA 91301 (US)
(74) Representative: KIPA AB
(86) International application number: PCT/US2014/022041
(87) International publication number: WO 2014/159121

(56) References cited:
- US-A1- 2004 085 969
- US-B1- 6 243 754

## Description

### BACKGROUND

The disclosure relates to routing subscribers in a networking environment through a gateway device. Gateway devices can be used to provide access to a network, such as the Internet, to multiple subscribers through one or more internet service providers. Some types of gateway devices can be used to provide access to hundreds or thousands of different subscribers and network capable devices. Gateway devices can be used to control internet access in public and private venues. It is important that the gateway provide a secure and reliable environment for subscribers to access the internet. When the gateway devices do not work properly it can be frustrating for subscribers that can no longer connect to the internet or that experience poor performance due to overloaded access points of the gateway device.

US2004/0085969 discloses an SVC established between a client and a host by dynamically configuring a host CPE device using a custom module designed for the host CPE device. The configured host CPE device enables communication between the client and the host via the SVC connection.

US6,243,754B1 discloses a method by which two or more cooperating end-users of the Internet and/or other network can dynamically select and use a single ISP from a multitude of ISPs based on the application requirements.

### SUMMARY

The invention is defined by the claims.

Load balancing of subscriber traffic can be an important consideration when managing gateway devices. It can also be a difficult and time consuming task to manage given the complexity and changing constraints of systems and network-capable devices. Current systems provide users wide flexibility and many options for managing load balancing. Many of these systems determine on a packet-by-packet basis how to route the traffic. The present disclosure provides embodiments of a load balancing system that is simple to set up and manage, yet provides robust load balancing capabilities. Thus, the present disclosure provides a system that substantially lowers the costs of setting up and maintaining a quality load balancing system. The system can perform network interface monitoring operations in order to determine if one or more of the network interfaces have ISP connections and are available to transport network traffic over a network, such as the Internet.

In the present disclosure, a local network connection system (LNCS) can be configured to balance subscriber network traffic. The LNCS can have a plurality of network interfaces that are configured to connect subscribers to one or more available network service providers, such as Internet Service Providers (ISP), in order to provide access to a network, such as the Internet. Load balancing of subscriber traffic can be accomplished by assigning subscribers to the available network interfaces. In one aspect of the invention, a subscriber can be assigned to a network service provider by assigning a subscriber or a subscriber device to a specific routing table associated with a network interface. Each routing table can have a plurality of routes that direct network-bound traffic through one of the plurality of network interfaces to an available network service provider. The assigned routing table can be configured to have a default route that directs the network-bound traffic through a specific network interface and to a specific ISP. The assignment of routing tables to subscribers can be based on a rule set that determines the network interface and the ISP a subscriber will use. The rule set can be configured to balance the load on the network interfaces, the network service providers, and provide failover options for the LNCS. The LNCS can be configured to dynamically modify the assignment subscribers to the various network interfaces and ISPs.

The LNCS can perform network interface monitoring operations to determine if one or more of the network interfaces have ISP connections and are available to transport network traffic over a network, such as the Internet. The interface monitoring operation provides information used by the LNCS to distribute traffic among multiple network interfaces ISP connections. The LNCS can be configured to periodically perform active interface monitoring operation on the network interfaces. In some examples a user/administrator of the LNCS can configure the interface monitoring operations. Some aspects of network interface monitoring may also track other metrics such as, but not limited to, link bandwidth utilization, link latency, link jitter, and/or other metrics.

### BRIEF DESCRIPTION OF THE DRAWINGS

The foregoing aspects and many of the attendant advantages of this disclosure will become more readily appreciated as the same become better understood by reference to the following detailed description, when taken in conjunction with the accompanying drawings, wherein:
FIG. 1 is a block diagram depicting an illustrative embodiment of a computing environment implementing a network routing system.
FIG. 2 is a diagram depicting an embodiment of routing policies used by a local network connection system.
FIG. 3 is a diagram depicting another embodiment of routing policies used by a local network connection system.
FIG. 4 is a diagram depicting another embodiment of routing policies used by a local network connection system.
FIG. 5 is a diagram depicting another embodiment of routing policies used by a local network connection system.
FIG. 6 is a flow diagram depicting an illustrative routine for the execution of an interface monitoring system.

### DETAILED DESCRIPTION

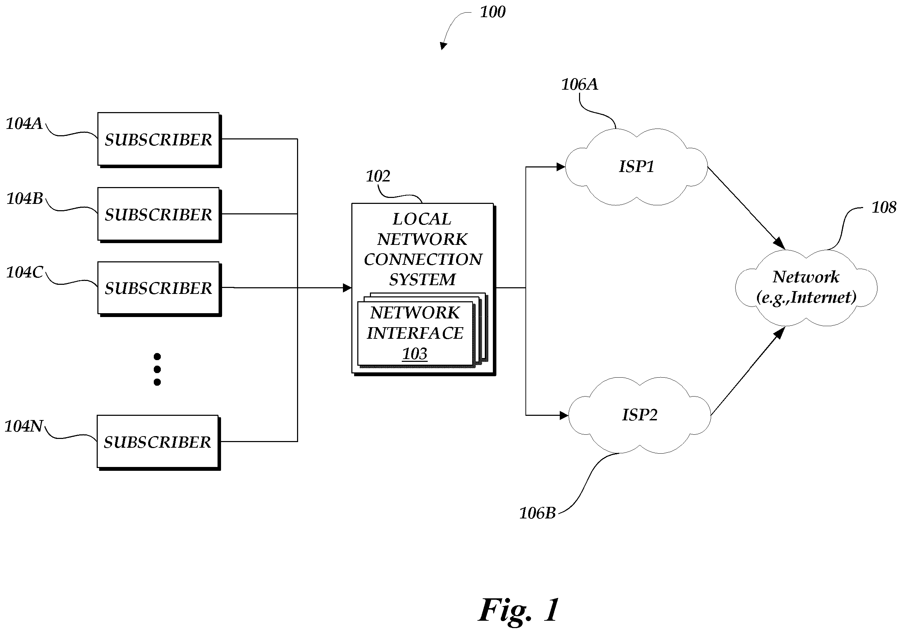

Figure 1 illustrates a computing environment for a network routing system 100. The network routing system 100 includes a local network connection system (LNCS) 102. The LNCS 102 is in communication with a first Internet service provider (ISP) 106A and a second ISP 106B, and a plurality of subscribers 104A-N. The LNCS 102 can provide subscribers 106 with access to a network 108, such as the Internet, through one or more ISPs 106A-B. The LNCS 102 can be a single gateway device or a plurality of gateway devices. In some embodiments, the LNCS 102 can be a distributed system of routers, switches, and other device that are configured to provide connection capabilities for local users. In some embodiments, a plurality of gateway devices can form an LNCS 102. The LNCS 102 can support a plurality of subscribers 104, such as, for example 50, 200, 1000, 2000 or more subscribers. The LNCS 102 can have one or more hardware processors configured to execute one or more software modules comprising executable instructions.

The LNCS 102 has a plurality of network interfaces 103, also referred to as network interface ports, that are configured to be in communication with subscribers 104A-N. Each network interface can be associated with a specific label (e.g., WAN, AUXO, AUX1, ETH0, etc.) having an assigned port number. For example, in one embodiment, a network interface port 103 labeled WAN can have the lowest port number and a network interface port labeled AUX5 can have the highest port number.

The LNCS 102 can have a plurality of routing tables for routing network-bound traffic. The network traffic can be split into system traffic and subscriber traffic in order to allow different routing rules for each type of traffic. System traffic can be routed through a system routing table, which can be visible on a LNCS management interface, and can be used by services running on the LNCS 102. Subscriber routing tables can be used for direct subscriber network traffic through network interfaces 103 of the LNCS 102 to an ISP 106.

Each network interface 103 can be associated with a specific routing table. The network interfaces 103 are configured to route network traffic from a subscriber 104 through an ISP 106 to the network 108 using the associated routing table. A default route of the routing table is used to route the network traffic through a specific network interface 103. The routing tables can be used to associate a network interface 103 with at least one ISP 106. An LNCS 102 may have a plurality of network interfaces 103 associated with a single ISP. In some embodiments, all of the network interfaces can be associated with the first ISP 106A or the second ISP 106B. The routing tables associated with each network interface 103 can be assigned to a subscriber. The assigned routing table is used in directing network-bound traffic from the subscriber or device to the network 108. The assigned routing table effectively assigns the subscriber to the network interface 103 and ISP 106 associated with the default route of the assigned routing table.

The network interfaces 103 can have a link connectivity status (e.g., link UP/DOWN) and/or a network availability status (e.g., available/unavailable). The network interfaces 103 can also have link quality estimates based on link quality metrics, such as link bandwidth utilization, link latency, link jitter, and/or other metrics.

The link status can indicate whether the link is functioning. When a network interface's link status transitions to "UP", a route entry to the ISP 106 connected to the network interface can be added to routing tables in the system, which can include the system routing table and additional routing tables. When a network interface's link status transitions to "DOWN" the route entry through the network interface can be removed from routing tables. Alternate routes can be used to direct traffic to the ISP 106 when the routing table route entries associated with specific network interfaces are removed.

The network availability status can indicate if a network 108 is accessible via a specific network interface 103. In some embodiments, the network availability status can be determined by active interface monitoring. When a network interface 103 is available, the default route for the network interface 103 can be added to the system routing table. When a network interface 103 is unavailable, the default route for the network interface 103 can be removed from the routing table.

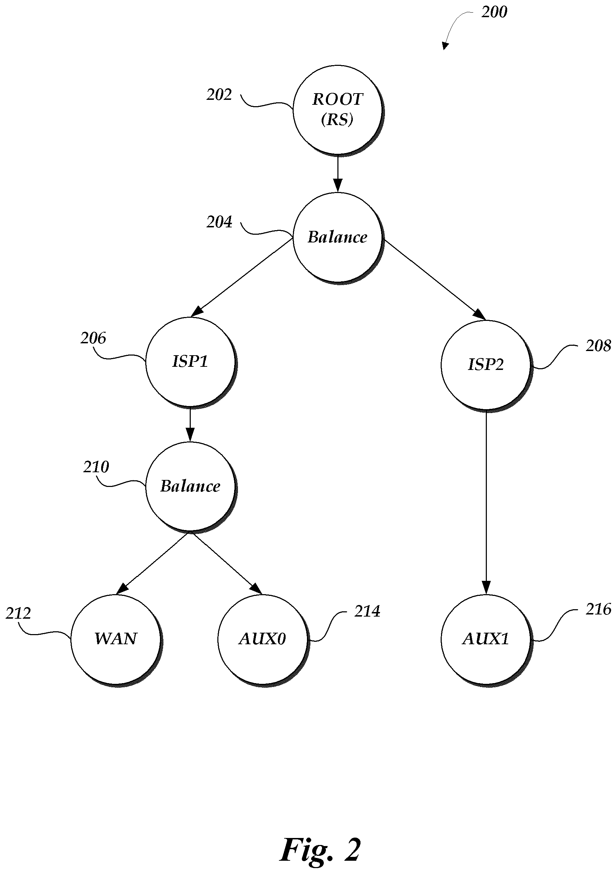

The LNCS 102 can have routing policies, which are rules that govern the allocation of routing tables. The routing policies govern how network traffic is distributed across the available network interfaces 103. A routing policy assigns or re-assigns a routing table to a subscriber via a network interface 103. The routing tables can be influenced by statuses of the network interfaces 103, such as the link status and network availability status. For example, the routing tables can be created, modified, and/or deleted based on the status of the network interfaces, such as the link connectivity status or the network availability status. In some embodiments, usage of the routing tables can be prioritized by assigning priority values to specific routing tables. Routing policies are described in further detail in association with Figure 2.

The plurality of subscribers 104A-N can be computing devices that connect to the LNCS 102 in order to communicate over the network 108. The computing devices may be any of a number of computing devices that are capable of communicating over a network including, but not limited to, a data center server, workstation, laptop, personal computer, tablet computer, electronic book reader, personal digital assistant (PDA), hybrid PDA/mobile phone, mobile phone and the like. The subscribers 104A-N can communicate with the LNCS 102 via a network. Those skilled in the art will appreciate that the network may be any wired network, wireless network or combination thereof.

The network 108 may be a personal area network, local area network, wide area network, cable network, or combination thereof. Protocols and components for communicating via any of the other aforementioned types of communication networks are well known to those skilled in the art of computer communications and thus, need not be described in more detail herein.

In this embodiment, the network routing system 100 has a first ISP 106A and a second ISP 106B in communication with the LNCS 102. The ISPs 106A-B can have distinct IP and network addresses. In general, although not required, the ISP connections to the LNCS 102 can be provisioned by distinct ISPs, in order to help provide true redundancy and failure protection. Each ISP can have different types of connections such as a T1 connection, a DSL connection, or other type of connection. The connections can have different speeds and characteristics. Protocols and components for ISPs are well known to those skilled in the art of computer communications and thus, need not be described in more detail herein.

Load balancing of subscriber traffic can be an important consideration. Generally, load balancing is performed on a per-session basis, rather than on a per-subscriber basis. For a per-session balancing system, every time a subscriber initiates a new session (e.g., opens a browser), the network attempts to balance the load of the network traffic. This process can be a difficult and time consuming task to manage given the complexity and changing constraints of systems. The LNCS can be configured to balance network traffic by providing load balancing on a subscriber level rather than per-session.

The LNCS 102 can be configured to balance subscriber network traffic by assigning each subscriber to one of the available ISPs. The subscribers can be assigned to a specific ISP based on the routing policies of the LNCS 102. The routing policies are a rule set that can be used to balance the load on the network interfaces, the ISPs, and provide failover options for the LNCS 102. In some embodiments, the LNCS 102 can assign subscribers to an ISP by assigning subscribers to a specific routing table associated with a network interface. The routing table defines routes for directing network-bound traffic through a specific ISP. The routing table may contain default routes for directing certain types of traffic and other routes for specific traffic through different ISPs (e.g., traffic destined to a corporate email server may be configured to egress a specific ISP). A default route may be used to direct general network-bound traffic. In some embodiments, the default route is used to direct all or a majority of network-bound traffic. In some embodiments, the LNSC 102 can load balance by assigning subscribers to a specific network interface. Each network interface can be associated with a specific ISP. The LNCS 102 can transfer subscribers between network interfaces, which can change the ISP associated with the subscriber.

In some embodiments, subscribers can be assigned to an ISP based, at least in part, on a relative weight associated with the downstream speed of each ISP link. The assignment can take into consideration quality metrics associated with an ISP link such as, but not limited to, link bandwidth utilization, link latency, link jitter, and/or other quality metrics. In an illustrative example, the LNCS 102 is configured with three ISP links having 10, 20 and 30 Mbps downstream speed, respectively. If 60 subscribers are connected, the LNCS 102 assigns 10 subscribers to the first ISP, 20 subscribers to the second and 30 to the third ISP. The usage of relative weights can help equalize the contention ratio of subscribers among the available ISPs. In some embodiments, the system can consider contention ratio differences imposed by different ISPs (e.g., the quality of ISP links could vary from business-grade to highly congested consumer-grade links). The LNCS 102 can also determine whether to reassign a subscriber to another ISP when the subscriber changes IP addresses because the new address might be configured with respect to another ISP.

Although the LNCS 102 can assign a subscriber to a single ISP, there are cases where a subscriber's traffic may need to egress on more than one network interface or ISP. This may occur when, for example, a subscriber communicates with a portal page that is accessible through a network interface that is not connected to the ISP associated with the subscriber. The subscriber routing tables may contain routes, in addition to the default route, to accommodate this situation.

The LNCS 102 can be configured to utilize different methods for managing subscribers, such as, no load balancing or failover, load balancing between available subscriber network interfaces, and failover between subscriber network interfaces, among others. In some embodiments, the different configurations can be governed by a license key that determine what configurations are available to the LNCS 102.

In some embodiments the LNCS 102 can be configured where there is no load balancing or failover. The system routing table can be configured to route subscriber traffic and system traffic. The network interfaces can be configured and monitored accordingly. The routing table can be configured with a default route to the network 108 using an assigned network interface for all subscribers. The routing table can be automatically configured with local subnet routes to directly attached networks, such as WAN networks.

An administrator can manually override the default route by manipulating the routing table. Subscribers and the LNCS 102 can access hosts on more than one network interface. When load balancing and failover is disabled, network interface status changes (e.g., available/unavailable) detected by interface monitoring do not have an effect on routing tables. Likewise, link connectivity status changes (e.g., Link UP/DOWN status) do not have an effect on routing tables.

In some embodiments the LNCS 102 can implement a system with load balancing between available network interfaces. The LNCS 102 can provide load balancing of the available network interfaces through management of the routing tables. The LNCS 102 can manage (e.g., add/delete/modify) routes to the network 108 for each configured network interface. The routing tables can be automatically managed by the LNCS 102.

Each network interface can be assigned a priority, with one interface having the highest priority. The network interface associated with the highest priority can be considered the primary network interface. The LNCS 102 can manage the routes so that network traffic is being routed through the primary network interface.

Management of routes can be based on the configuration of the different network interfaces and network interface information, such as interface availability and/or link status. In some configurations the management of routes can use interface monitoring to determine the status of the network interfaces. When the network availability status for a particular network interface changes from available to either unavailable or unknown, the system routing table can be automatically adjusted to account for the change. The LNCS 102 can adjust the priority of the route associated with the network interface affected by the change. Another route, associated with a different network interface, could be elevated to high priority which makes the associated network interface the new primary network interface. In one embodiment, a selection algorithm can determine the next qualifying network interface based, at least in part, on port number. Subscribers associated with the unavailable network interface can be redistributed to other network interfaces by modifying the routing tables associated with the subscribers.

If the network availability status for a particular network interface changes from unknown or unavailable to an available state, the LNCS 102 can adjust the routing tables to account for the new interface. If the newly available network interface has a higher priority than the current primary network interface (which priority could be based on port number), then the routing table can be adjusted so that the route associated with the newly available interface becomes a higher priority.

In some embodiments, the newly available network interface will be available for association with newly connected subscribers. The existing subscribers assigned to the other network interface are not, necessarily, actively re-balanced amongst the other network interfaces. The re-balancing when a network interface becomes available can be passive. Alternatively, the rebalancing can be active in which case the LNCS 102 may move some of the subscribers onto the newly available network interface. Also, active rebalancing may be activated when other metrics associated with any link (e.g., link speed, link utilization, latency, jitter, etc) change below or above predefined thresholds. Active rebalancing can be activated independently of link connectivity status and/or link availability status.

In some configurations the management of routes can use link status. When the link status for a particular network interface changes from up to down then the LNCS 102 can remove the default route associated with the interface (from the system routing table). If the primary interface goes down, then another interface can be selected as the primary network interface. In some embodiments, the selection logic can use the priority of the interface port. The LNCS 102 can remove the route from the subscriber routing table. The subscribers associated with the network interface that is down are reassigned to other network interfaces.

When the link status for a particular network interface changes from down to up then the procedure can be reversed. The LNCS 102 can check whether the new interface should be nominated as the primary network interface. Subscribers can be passively rebalanced, such that existing subscribers are not actively rebalanced and new subscribers can be balanced amongst network interfaces in accordance with a rule set used by the LNCS 102. Alternatively, the LNCS 102 may trigger active rebalancing.

In some embodiments, a network interface may be configured to use PPPoE or DHCP to obtain its internet protocol (IP) address and if the IP address cannot be obtained or is lost after having previously been obtained, the interface may be treated as if its link status is down even though the physical link status may indicate that the link is up.

The priority of network interface ports can be determined by a physical port number where the ports range from a lowest port number to a highest port number. In one embodiment the WAN labeled network interface port has the lowest port number and the AUX1 labeled network interface port has the highest port number. In some embodiments, the lowest port number has the highest priority and the highest port number has the lowest priority.

In some embodiments, the LNCS 102 can be configured in a failover mode. In the failover mode, the system routing table can be used for routing all traffic (i.e., both system and subscriber traffic). Network-bound traffic mainly egresses the primary network interface unless the routing table is configured with specific routes dictating usage of a non-primary network interface. Examples of the latter can include directly attached subnets and statically configured routing entries.

Multiple network interfaces on an LNCS 102 can help improve reliability of service for connecting subscribers to a network. If it is detected that the network interface being relied upon to reach the network is unable to do so, then a failover mechanism can be used to substitute another network interface in its place.

The failover mechanism can be enabled via a configuration parameter on the LNCS 102. If enabled, the failover mechanism can determine which network interface is to serve as the default network interface, and whether it is necessary.

The network interfaces can be configured with a priority between a highest (e.g., 1) and lowest (e.g., 100). The LNCS 102 can be configured, by an administrator, so that each network interfaces that is configured to have network connectivity is assigned a priority. The LNCS 102 can be configured so that network interfaces which do not have network connectivity are not assigned a priority.

In some embodiments, network interfaces can be automatically assigned a priority based on the logical number of the associated network interface (e.g., the first network interface automatically assigned priority 1, the second network interface automatically assigned priority 2 and so on).

Network interfaces configured with network connectivity can be continuously monitored for network connectivity. In some embodiments, only the network interface with the highest priority that is available is monitored. Initially, the highest-priority network interface will be assigned the role of default network interface. When and if it is detected that the present default network interface becomes unavailable, it will be replaced by the next highest priority network interface that is available at that time. An update to the system routing table can be sent indicating that a change in the default network interface has occurred. When the failover mechanism changes the default network interface, it can remove the existing default route from the system routing table, and can add one for the new default network interface. The failover may also be triggered by events other than changes in the link connectivity status and/or link availability status. The failover may be triggered manually by an administrator of the LNCS 102 or automatically when other metrics associated with each link change above or below predefined thresholds.

Once a network interface has become the default network interface, it can remain as the default as long as it is available or until a failover is triggered by one of the conditions described above. In some embodiments, the LNCS 102 may be configured to reset to the highest priority available network interface. Thus, as soon as a higher priority network interface returns to availability, it will take over the role of default network interface.

Whenever the default network interface is changed, it can disrupt existing subscriber sessions that are operating over the default logical network interface. This is because of the change of default route, which will now route packets to the new default network interface instead of the old one, which can cause a new network address translation of the IP address to be used for those packets. In some embodiments, a system administrator may wish to choose the time to manually reset the failover function rather than letting it occur automatically.

In some embodiments, when a higher priority logical network interface returns to availability, the LNCS 102 may be configured to continue using the lower priority network interface as the default network interface as long as it is available and meets other eligibility criteria.

Should a situation arise in which none of the eligible logical subscriber network interfaces are healthy (i.e., the network is presumably unreachable via any subscriber network interface), and this situation persists for a threshold length of time, the LNCS 102 can be configured to reboot. The LNCS 102 can send an informative syslog(s) prior to reboot.

In an illustrative example, a LNCS 102 has WAN, AUX1, and AUX2 labeled ports configured as network interfaces. WAN has the lowest port number and AUX2 has the highest port number. The WAN network interface is the primary network interface. If the WAN network interface becomes unavailable, the primary network interface is switched to the AUX1 network interface. If the AUX1 network interface becomes unavailable, the primary network interface is switched to the AUX2 network interface. If the WAN network interface later becomes available, the primary network interface is switched back to the WAN network interface from the AUX2 network interface.

Figure 2 illustrates an example of a routing policy 200. Routing policies are rules that govern the allocation of routing tables, which can govern how network traffic is distributed across the available network interfaces. In some embodiments, routing policies can be configured via WMI, CLI, or SNMP. The configuration consists of a routing policy program which conforms to the routing policy language. If a user defined policy is not configured, the system can create a default routing policy. In one embodiment, a default routing policy can load balance between all available network interfaces.

Once a routing table is assigned to or associated with a subscriber that association can remain in effect until rebalancing is performed. Rebalancing can be performed after an LNCS 102 reboot, new authorization attributes (e.g. a radius attribute), changes in quality metrics, the subscriber is cleared from the system, or other events.

Routing polices can be constructed as a tree of routing rules with a single root node. Example implementations of routing policies are illustrated in Figures 2-5. An application can allocate a routing table by selecting a node by name. The selected node selects a child, which in turn selects a child, etc. The recursion continues until a routing table node is reached which is then returned as the allocated routing table. The following types of routing rules (or nodes) can include a routing table node (RT), a rule set node (RS), a use node, and a balance node, and other nodes.

Routing table nodes can be built automatically based on configuration of the LNCS 102. A routing table node can be created for each network interface. A routing table node can be available for allocation if the network availability status for the associated network interface port is available. In some embodiments, the weight associated with a routing table node can be the bandwidth of the associated network interface 103.

A rule set node is a node with one or more children. The rule set determines how subscribers are allocated to the one or more children. When selected for allocation, a rule set node can return the first available child based on the rule set. A rule set node is available if it has at least one child that is available. In some embodiments, the weight associated with a rule set node is the weight of the first available child.

A use node is a node with a single child. When selected for allocation, a use node returns its child. A use node is itself available if the child is available. The weight associated with a use node can be the weight of the child.

A balance node is a node with one or more children. A balance node is available if and only if it has at least one child that is available. In some embodiments, the weight associated with a balance node is the sum of weight of its available children. A balance node can distribute its allocations across its available children in proportion to the weight of the children. A balance node can track the number of outstanding allocations against each of its children (as well as the total number of allocations) in order to properly distribute new allocation requests.

The routing policies shown herein are merely embodiments of exemplary routing policies. It should be emphasized that many variations and modifications may be made to these policies.

With specific reference to Figure 2, the routing policy 200 is configured to determine an allocation of a subscriber between routing table nodes WAN 212, AUXO 214, and AUX1 216 based on the routing policy 200. The table nodes WAN 212, AUXO 214, and AUX1 216 are associated network interfaces of an LNCS. Nodes ISP1 206 and ISP2 208 are associated with separate internet service providers. WAN 212 and AUXO 214 are connected to ISP1 206, while AUX1 is connected to ISP2 208. In Figure 2 the routing policy comprises a root node 202. Traffic directed to the root node 202 is load balanced between ISP1 206 and ISP2 204 by balance node 204. Traffic directed to ISP1 206 is load balanced between WAN 212 and AUXO 214 by balance node 210 while traffic directed to ISP2 208 is sent to AUX1 216. A routing table allocation from root 202 will select either ISP1 206 or ISP2 208, based on the balancing algorithm from balancing node 204. If ISP1 206 is selected, then either WAN 212 or AUXO 214 is selected, based on the balancing algorithm from balancing node 210. If ISP2 208 is selected, then AUX1 216 is selected.

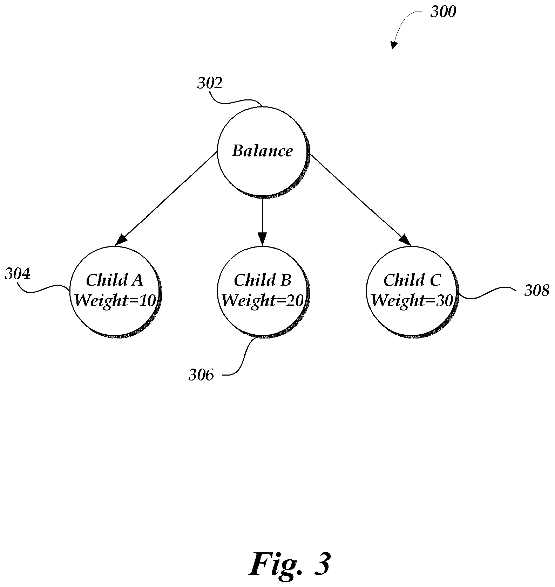

Figure 3 illustrates an example of a routing policy 300 for balancing subscribers. The routing policy 300 has a balance node 302 with three children 304, 306, and 308 with weights of 10, 20, and 30, respectively. Allocations of subscribers would occur in the ratio of 1:2:3. For every six allocations (assuming no de-allocations) one would go to Child A 304, two subscribers would go to Child B 306, and three subscribers would go to Child C 308.

When a child node becomes unavailable, the balance node 302 can adjust its total number of allocations by subtracting the number assigned to the now unavailable child node. The new total can be reported up the routing policy hierarchy to help keep upper level balance nodes in sync. Existing and new allocations can be distributed against the remaining available nodes according to their weights.

When a child node that was unavailable becomes available, a balance mode can rebalance the subscribers. The type of rebalancing behavior can be dictated by the configuration of the balance node. For example, the balance node 302 could use passive or active rebalancing.

Passive and active rebalancing will now be described in conjunction with the balance node 302 (with three children having weights of 10, 20, and 30). Passive rebalancing does not affect the existing allocations of subscribers. In passive rebalancing, new subscribers are allocated to a newly available node and the existing subscribers remain with a previously allocated note. By way of example, for passive rebalancing, assume that Child 1 304 and Child 2 306 are available and Child 3 308 is unavailable. Child 1 304 and Child 2 306 are in balance with allocations of 100, and 200 subscribers each. When Child 3 308 becomes available, the next 300 allocations will be assigned to Child 3 308 at which point all three children will be in balance. The existing allocations to Child 1 304 and Child 2 306 are not affected. For simplicity, it is assumed that no de-allocations occurred.

Unlike passive rebalancing, active rebalancing affects the existing allocations. In active rebalancing, the existing subscribers are reallocated so that the nodes are balanced based on the current availability of the network interfaces. By way of example, for active rebalancing, assume that Child 1 304 and Child 2 306 are available and Child 3 308 is unavailable.. Child 1 304 and Child 2 306 are in balance with allocations of 100, and 200 subscribers each. When Child 3 308 becomes available, the existing allocations can be rebalanced. The result will be an allocation of 50 subscribers to Child 1 304, 100 subscribers to Child 2 306, and 150 subscribers to Child 3 308. For simplicity, it is assumed that no de-allocations occurred.

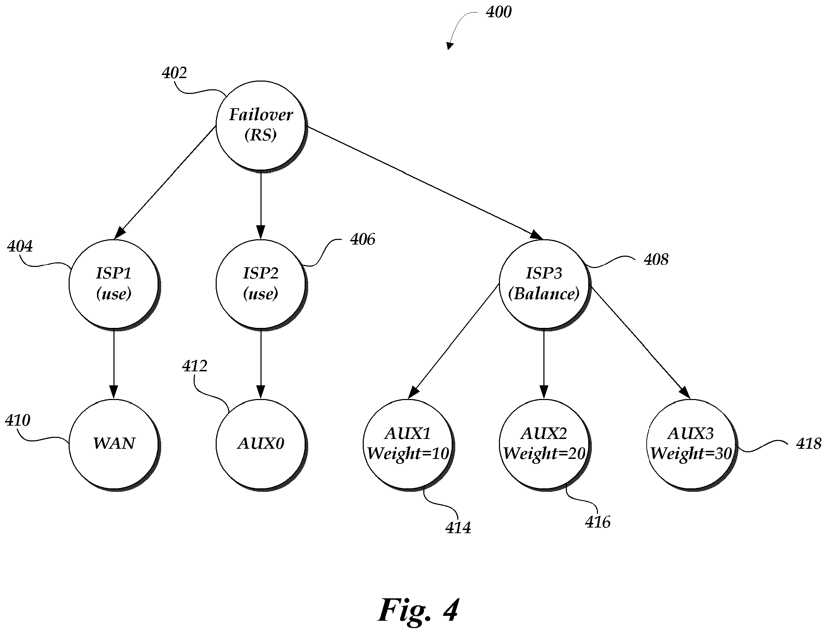

Figure 4 illustrates another example of an implementation of a routing policy 400. The routing policy 400 illustrates a failover procedure and is configured to determine an allocation of a subscriber between routing table nodes WAN 410, AUXO 412, AUX1 414, AUX2 416, and AUX3 218 based on the specific routing policies. WAN 410 is connected to ISP1 404, AUXO is connected to ISP2 406, while AUX2 414, AUX3 416, and AUX4 418 are connected to ISP3 408. This example illustrates a configuration which will route all subscriber traffic over WAN 410 unless WAN 410 is unavailable, in which case AUXO 412 is used, if available. If both WAN 410 and AUXO 412 are unavailable, balancing would occur between the available routing tables in the set of AUX1 414, AUX2 416, and AUX3 418.

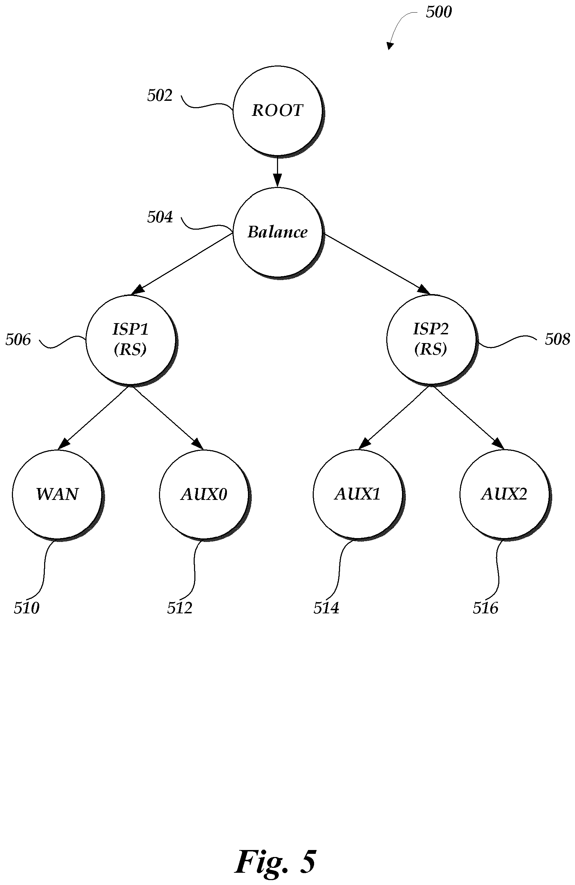

Figure 5 illustrates another example of an implementation of a routing policy 500. The routing policy 500 is configured to determine an allocation of a subscriber between routing table nodes WAN 510, AUXO 512, AUX1 514, and AUX2 516 based on the specific routing policies. WAN 510 and AUXO 512 are connected to ISP1 506. AUX1 514 and AUX2 516 are connected to ISP2 508. In this example, subscriber traffic will be balanced between ISPI 506 and ISP2 508. WAN 510 is connected to ISPI 506 with AUXO 512 acting as the backup for ISP1 506. All subscribers routed to ISP1 506 will be allocated to WAN 510. If WAN 510 is unavailable, all subscribers routed to ISP1 506 will be allocated to AUXO 512. Similarly AUX1 514 is connected to ISP2 508 with AUX2 516 acting as the backup for ISP2 508. All subscribers routed to ISP2 508 will be allocated to AUX1 514. If AUX1 514 is unavailable, all subscribers routed to ISP2 508 will be allocated to AUX2 516.

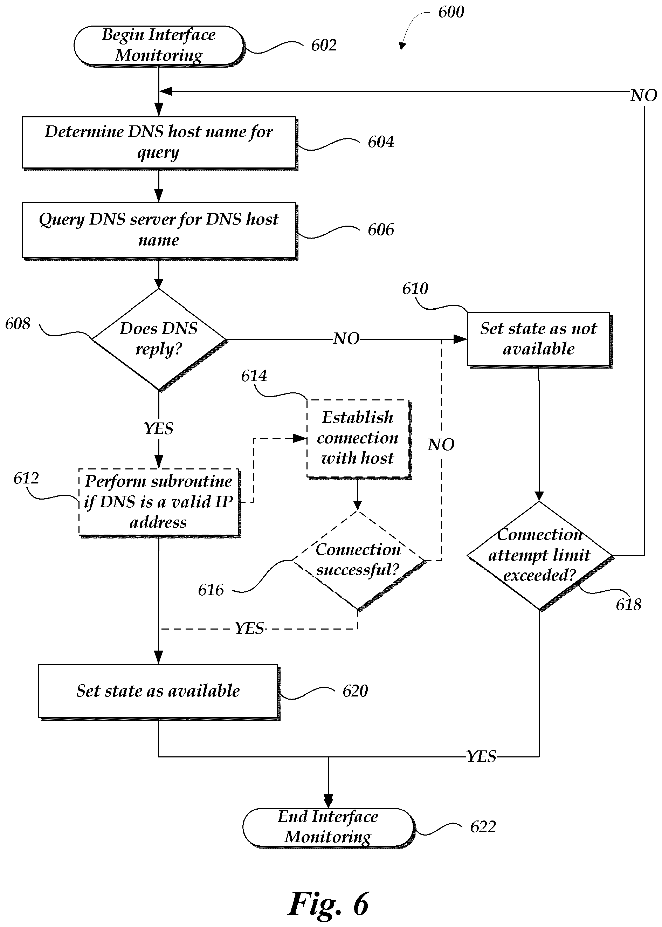

Figure 6 is a flow diagram illustrating a method for network interface monitoring operations. The LNCS can perform network interface monitoring operations in order to determine if one or more of the network interfaces have ISP connections that are available to transport network traffic over a network, such as the Internet. The interface monitoring operation provides information used by the LNCS 102 to distribute traffic among multiple network interfaces to one or more ISP connections. The information can be used in applications such as load balancing. The LNCS 102 can be configured to periodically perform the active interface monitoring operation at regular intervals on network interfaces 103. In some embodiments a user/administrator of the LNCS 102 can configure the interface monitoring operations.

The mechanism for network interface monitoring is based on periodically sending active-monitoring traffic, such as domain name server (DNS) queries and other probing traffic, instead of observing traffic already flowing across the network links, which can be referred to as passive-monitoring. The mechanism for interface monitoring is based on the DNS resolution of automatically-generated or user-selected DNS host names. If host names can be successfully resolved into IP addresses, and, optionally, connections can be successfully established to Internet services provided by these hosts, the assumption is that network traffic can be transported through the corresponding network interface. For usage scenarios in which this mechanism fails too frequently, interface monitoring can be disabled and manual monitoring or other external monitoring mechanisms can be used. The interface monitoring operations can be used when a network interface has been previously declared unavailable for transporting network traffic, in which case there might not be any network traffic to observe and therefore the interface would continue to remain in the unavailable state.

The interval of active-monitoring operations are short enough to provide frequent updates, but not too short to minimize the amount of monitoring traffic. In some embodiments active monitoring operations occur every 30 seconds, every minute, every two minutes, five minutes or other acceptable period of time.

When an interface monitoring operation is successful, the network interface will be considered available for transporting network traffic. When an interface monitoring operation fails, the operation can be repeated additional times up to a threshold value. For example, in one embodiment, the operation can be repeated with two additional DNS names, if all three operations fail, then the network interface will be considered unavailable. The use of multiple attempts at establishing communication between the LNCS 102 and the ISP can help prevent occasional fluctuations in the level of ISP service from being considered as severe failures and declaring a network interface unavailable.

The interface monitoring determines whether a network interface meets the criteria for transporting network traffic, but does not determine whether or not a network interface will or will not be actually used for transporting the network traffic. The responsibility of acting upon the information provided by the interface monitoring mechanism lies with separate functions of the LNCS 102, for example load balancing.

The determination made by the interface monitoring mechanism can be based on heuristics, and therefore is only an estimate of the quality of the ISP connection: many factors, including network load, DNS response, and local regulations, can lead to "false positives", in which a functioning ISP connection is declared unavailable by the monitoring mechanism.

The inputs to the interface monitoring operation can include monitoring interval, current time, physical link status, method of DNS host name, number of attempted operations, reply from DNS server, and connection with the host.

The interface monitoring operation 600 begins at block 602 when active interface monitoring is initiated by the LNCS 102 for a specific network interface. Interface Monitoring of each network interface for each ISP connection can start when the LNCS 102 administrator enables the active monitoring of the network interfaces, or when the LNCS 102 boots up if the mechanism was already enabled.

At block 604 a DNS host name is selected for query. The DNS host name can be automatically-generated or selected from a user-selected list. The DNS host names that are automatically generated can be configured to be generated that do not have a valid IP address.

At block 606, the DNS server(s) of the corresponding network interface is queried for the selected DNS host name. At decision block 608, the LNCS 102 determines whether there is a reply from the DNS server. If no DNS server replies, then the process proceeds to block 610 and sets the state as not available. If the DNS server replies with a lookup error or with a valid IP address then the routine can proceed to block 620.

At block 620 the state of the network interface is set to available and interface monitoring ends at 622. If the DNS host name is a valid IP address the interface monitoring service can perform an optional subroutine at block 612 (as indicated by dashed lines). The subroutine can establish a selected Internet service connection with the host at block 614. The optional subroutine can include probing the resolved hosts using services such as ping. If the connection is successful the routine proceeds to block 620 and sets the state as available. If the connection is not successful, the routine proceeds to block 610 and sets the state as not available.

After the state has been set to not available at 610, the interface monitoring service determines whether a connection attempt limit has been exceeded at block 618. The connection attempt limit can be a threshold value, such as three, that is configured to help determine the availability of the network. If the limit has not been exceeded then the routine returns to block 604 to run the routine until either the connection attempt limit has been exceeded or the connection is available. The use of multiple attempts at establishing communication between the LNCS 102 and the ISP helps prevent occasional fluctuations in the level of ISP service from being considered as severe failures and declaring a network interface unavailable.

The system can have a user interface for setting up and configuring active interface monitoring service. The state determined by the interface monitoring can be available to other LNCS functions, as well as to an LNCS administrator through the LNCS user interfaces.

It will be appreciated by those skilled in the art and others that all of the functions described in this disclosure may be embodied in software executed by one or more processors of the disclosed components and mobile communication devices. The software may be persistently stored in any type of non-volatile storage.

Conditional language, such as, among others, "can," "could," "might," or "may," unless specifically stated otherwise, or otherwise understood within the context as used, is generally intended to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without user input or prompting, whether these features, elements and/or steps are included or are to be performed in any particular embodiment.

Any process descriptions, elements, or blocks in the flow diagrams described herein and/or depicted in the attached figures should be understood as potentially representing modules, segments, or portions of code which include one or more executable instructions for implementing specific logical functions or steps in the process. Alternate implementations are included within the scope of the embodiments described herein in which elements or functions may be deleted, executed out of order from that shown or discussed, including substantially concurrently or in reverse order, depending on the functionality involved, as would be understood by those skilled in the art. It will further be appreciated that the data and/or components described above may be stored on a computer-readable medium and loaded into memory of the computing device using a drive mechanism associated with a computer readable storing the computer executable components such as a CD-ROM, DVD-ROM, or network interface further, the component and/or data can be included in a single device or distributed in any manner. Accordingly, general purpose computing devices may be configured to implement the processes, algorithms and methodology of the present disclosure with the processing and/or execution of the various data and/or components described above.

It should be emphasized that many variations and modifications may be made to the above-described embodiments, the elements of which are to be understood as being among other acceptable examples.

### Additional aspects of the invention

In some aspects of the invention, the network interfaces can be categorized using classes. A network interface class can apply to one or more network interfaces of an LNCS. The network class can be used as an additional layer for filtering and assigning network subscribers to network interfaces. Classes can have one or more characteristics or criteria that are used for assigning subscribers to the class. The classes can be mutually exclusive. When a subscriber is assigned to a class, the subscriber's network traffic will be routed through network interfaces associated with the assigned class. Any load balancing or failover policies for subscribers can be specific to the assigned class. If a subscriber needs to be transferred to a different network interface, such as for load balancing purposes, network status, link status, or other reasons, the subscriber will be assigned to network interfaces within the same class assigned to the subscriber. Each class can utilize specific routing tables that are different than the routing tables used by other classes.

In an illustrative example, a network class can be used to divide international subscribers and domestic subscribers. Domestic subscribers are assigned to network interfaces having a domestic class and international subscribers are assigned to network interfaces having an international class. All load balancing and failover policies for the domestic and international subscribers can be done on a per class basis.

## Claims

1. A local network connection system comprising:
a plurality of network interfaces, wherein each network interface is configured to be in communication with a network service provider,
a plurality of routing tables comprising routes for routing network traffic from one of the plurality of network interface ports to a network service provider, wherein each of the plurality of network interfaces has at least one routing table associated with the network interface; and
a network configuration system controller configured to:
determine a status of each of the plurality of network interfaces; and
assign a subscriber to one of the plurality of routing tables based, at least in part, on a routing policy and the status of each of the plurality of network interfaces, wherein the routing policy includes at least one criterion for determining an assignment of a subscriber to one of the plurality of routing tables, **characterized in that** the network configuration system controller is further configured to automatically balance the assignment of subscribers to the plurality of network service providers based, at least in part, on the routing policy.

2. The local network connection system of Claim 1, wherein the network configuration system controller is further configured to modify the routes of each of the routing tables based on the status of the network interfaces.

3. The local network connection system of Claim 1, wherein the network service provider is an internet service provider.

4. The local network connection system of Claim 1, wherein the criterion comprises a specific weight assigned to each network interface.

5. The local network connection system of Claim 1, wherein the criterion comprises a priority value associated with each network interface.

6. The local network connection system of Claim 5, wherein the network configuration system controller is further configured to allocate all subscribers to the network interface with the highest priority and with a status indicating that the network interface is connected to the network service provider.

7. The local network connection system of Claim 1, wherein the status of each of the network interfaces comprises at least one of a network link status and a network availability status.

8. A computer-implemented method for allocating subscribers to a local network connection system, the method comprising:
determining a status of each of a plurality of network interfaces, wherein each of the plurality of network interfaces is in communication with a network service provider;
associating a routing table to each of the network interfaces, wherein the routing table associated with the network interface comprises a route for routing network traffic from one of the plurality of network interfaces to network service providers; and
assigning a subscriber to one of the plurality of routing tables based, at least in part, on a routing policy and the status of each of the plurality of network interfaces, wherein the routing policy includes at least one criterion for determining an assignment of a subscriber to one of the plurality of routing tables;
**characterized by** the method further comprising:
associating a plurality of network service providers and each network interface with one of the plurality of network service providers; and
balancing automatically the assignment of subscribers to the plurality of network service providers based, at least in part, on the routing policy.

9. The computer-implemented method of Claim 8 further comprising, when the status of the network interface indicates that the network service provider is unavailable, modifying the routing tables associated with one of plurality of network interface to route the network traffic to a second network service provider.

10. The computer-implemented method of Claim 8 further comprising, when the status of one of the plurality of network interfaces indicates that the network interface is down, modifying the routing tables associated with the network interface to route the network traffic to a different network interface.

11. The computer-implemented method of Claim 8, wherein determining a status of each of a plurality of network interfaces is performed periodically.

12. The computer-implemented method of Claim 11 further comprising reassigning the subscribers to the plurality of routing tables when the status of one of the plurality of network interfaces changes.

13. The computer-implemented method of claim 8, further comprising monitoring network availability of a network interface, comprising:
querying a server from a network interface with probing data;
determining whether the server replies to the query;
setting the state of the network interface to available if the server does reply; and
setting the state of the network interface to not available if the server does not reply.

## Patentansprüche

1. Ein Anschlusssystem für ein lokales Netzwerk mit:
einer Mehrzahl von Netzwerkschnittstellen, wobei jede Netzwerkschnittstelle für die Kommunikation mit einem Netzwerkdienstanbieter ausgelegt ist,
einer Mehrzahl von Routingtabellen mit Routen zum Routing von Netzwerkverkehr von einer Mehrzahl von Netzwerkschnittstellen-Anschlüssen an einen Netzwerkdienstanbieter, wobei jede Mehrzahl von Netzwerkschnittstellen über mindestens eine der Netzwerkschnittstelle zugeordnete Routingtabelle verfügt; und
einem Netzwerkkonfigurations-Systemcontroller, der ausgelegt ist, um:
einen Status für jede aus der Mehrzahl von Netzwerkschnittstellen festzulegen; und
einem Teilnehmer eine der Mehrzahl von Routingtabellen zuzuweisen, zumindest teilweise auf Grundlage einer Routingstrategie und des Status jeder der Mehrzahl von Netzwerkschnittstellen, wobei die Routingstrategie mindestens ein Kriterium zur Festlegung einer Zuweisung eines Teilnehmers zu einer der Mehrzahl von Routingtabellen umfasst, **dadurch gekennzeichnet, dass**
der Netzwerkonfigurations-Systemcontroller weiterhin so ausgelegt ist, dass er automatisch die Zuweisung von Teilnehmern zu der Mehrzahl von Netzwerkdienstanbietern ausgleicht, zumindest teilweise auf der Grundlage der Routingstrategie.

2. Das Anschlusssystem für ein lokales Netzwerk gemäß Anspruch 1, wobei der Netzwerkonfigurations-Systemcontroller weiterhin zur Änderung der Routen jeder Routingtabelle auf der Grundlage des Status der Netzwerkschnittstellen ausgelegt ist.

3. Das Anschlusssystem für ein lokales Netzwerk gemäß Anspruch 1, wobei der Netzwerkdienstanbieter ein Internetdienstanbieter ist.

4. Das Anschlusssystem für ein lokales Netzwerk gemäß Anspruch 1, wobei das Kriterium ein spezifisches Gewicht einschließt, das jeder Netzwerkschnittstelle zugewiesen wird.

5. Das Anschlusssystem für ein lokales Netzwerk gemäß Anspruch 1, wobei das Kriterium einen Wert für die Priorität einschließt, die jeder Netzwerkschnittstelle zugewiesen wird.

6. Das Anschlusssystem für ein lokales Netzwerk gemäß Anspruch 5, wobei der Netzwerkonfigurations-Systemcontroller weiterhin zur Zuweisung aller Teilnehmer zur Netzwerkschnittstelle mit der höchsten Priorität und einem Status ausgelegt ist, der anzeigt, dass die Netzwerkschnittstelle an den Netzwerkdienstanbieter angeschlossen ist.

7. Das Anschlusssystem für ein lokales Netzwerk gemäß Anspruch 1, wobei der Status der einzelnen Netzwerkschnittstellen mindestens den Netzverbindungsstatus oder den Netzverfügbarkeitsstatus umfasst.

8. Ein computerimplementiertes Verfahren zur Zuweisung aller Teilnehmer zu einem Anschlusssystem für ein lokales Netzwerk, wobei das Verfahren Folgendes umfasst:
die Festlegung eines Status für jede der Mehrzahl von Netzwerkschnittstellen, wobei jede der Mehrzahl von Netzwerkschnittstellen in Kommunikation mit einem Netzwerkdienstanbieter steht;
die Zuweisung einer Routingtabelle zu jeder Netzwerkschnittstelle, wobei die der Netzwerkschnittstelle zugewiesene Routingtabelle eine Route zum Routing von Netzwerkverkehr von einer Mehrzahl von Netzwerkschnittstellen an Netzwerkdienstanbieter umfasst; und
die Zuweisung einer der Mehrzahl von Routingtabellen zu einem Teilnehmer, zumindest teilweise auf Grundlage einer Routingstrategie und des Status jeder der Mehrzahl von Netzwerkschnittstellen, wobei die Routingstrategie mindestens ein Kriterium zur Festlegung einer Zuweisung eines Teilnehmers zu einer der Mehrzahl von Routingtabellen umfasst;
**dadurch gekennzeichnet, dass** das Verfahren weiterhin Folgendes umfasst:
die Zuweisung einer Mehrzahl von Netzwerkdienstanbietern und jeder Netzwerkschnittstelle zu einer der Mehrzahl von Netzwerkdienstanbietern; und
den automatischen Ausgleich der Zuweisung von Teilnehmern zu der Mehrzahl von Netzwerkdienstanbietern, zumindest teilweise auf der Grundlage der Routingstrategie.

9. Das computerimplementierte Verfahren gemäß Anspruch 8, das weiterhin vorsieht, dass, wenn der Status der Netzwerkschnittstelle anzeigt, dass der Netzwerkdienstanbieter unerreichbar ist, die einer Mehrzahl von Netzwerkschnittstellen zugeordneten Routingtabellen geändert werden, um den Netzwerkverkehr an einen zweiten Netzwerkdienstanbieter zu routen.

10. Das computerimplementierte Verfahren gemäß Anspruch 8, das weiterhin vorsieht, dass, wenn der Status einer der Mehrzahl von Netzwerkschnittstellen einen Ausfall der Netzwerkschnittstelle anzeigt,
die der Netzwerkschnittstelle zugeordneten Routingtabellen geändert werden, um den Netzwerkverkehr an eine andere Netzwerkschnittstelle umzuleiten.

11. Das computerimplementierte Verfahren gemäß Anspruch 8, wobei die Bestimmung des Status jeder der Mehrzahl von Netzwerkschnittstellen regelmäßig durchgeführt wird.

12. Das computerimplementierte Verfahren gemäß Anspruch 11, das weiterhin vorsieht, dass die Teilnehmer der Mehrzahl der Routingtabellen neu zugewiesen werden, wenn sich der Status einer der Mehrzahl von Netzwerkschnittstellen ändert.

13. Das computerimplementierte Verfahren gemäß Anspruch 8, das weiterhin die folgende Überwachung der Netzverfügbarkeit einer Netzwerkschnittstelle vorsieht:
Serveranfrage mit Probedaten über eine Netzwerkschnittstelle;
Bestimmung, ob der Server auf die Anfrage antwortet;
Setzen des Status für die Netzwerkschnittstelle auf Verfügbar, wenn der Server antwortet;
und
Setzen des Status für die Netzwerkschnittstelle auf Nicht verfügbar, wenn der Server nicht antwortet.

## Revendications

1. Système de connexion à un réseau local, comprenant :
une pluralité d'interfaces réseau, où chaque interface réseau est configurée pour être en communication avec un prestataire de service de réseau,
une pluralité de tables de routage comprenant des chemins pour acheminer un trafic de réseau depuis l'un de la pluralité de points d'accès d'interfaces réseau vers un prestataire de service de réseau, où chacune de la pluralité d'interfaces réseau présente au moins une table de routage associée à l'interface réseau, et
une unité de commande de système de configuration de réseau configurée pour :
déterminer un état de chacune de la pluralité d'interfaces réseau ; et
attribuer un abonné à l'une de la pluralité de tables de routage au moins en partie sur la base d'une politique de routage et de l'état de chacune de la pluralité d'interfaces réseau, où la politique de routage inclut au moins un critère permettant de déterminer une attribution d'un abonné à l'une de la pluralité de tables de routage, **caractérisé en ce que**
l'unité de commande de système de configuration de réseau est en outre configurée pour équilibrer automatiquement l'attribution d'abonnés à la pluralité de prestataires de service de réseau au moins en partie sur la base de la politique de routage.

2. Système de connexion à un réseau local selon la revendication 1, dans lequel l'unité de commande de système de configuration de réseau est en outre configurée pour modifier les chemins de chacune des tables de routage sur la base de l'état des interfaces réseau.

3. Système de connexion à un réseau local selon la revendication 1, dans lequel le prestataire de service de réseau est un prestataire de service Internet.

4. Système de connexion à un réseau local selon la revendication 1, dans lequel le critère comprend un facteur de pondération spécifique attribué à chaque interface réseau.

5. Système de connexion à un réseau local selon la revendication 1, dans lequel le critère comprend une valeur de priorité associée à chaque interface réseau.

6. Système de connexion à un réseau local selon la revendication 5, dans lequel l'unité de commande de système de configuration de réseau est en outre configurée pour allouer tous les abonnés à l'interface réseau ayant la plus haute priorité et présentant un état indiquant que l'interface réseau est connectée au prestataire de service de réseau.

7. Système de connexion à un réseau local selon la revendication 1, dans lequel l'état de chacune des interfaces réseau comprend au moins l'un d'un état de liaison de réseau et d'un état de disponibilité de réseau.

8. Procédé implémenté par ordinateur destiné à allouer des abonnés à un système de connexion à un réseau local, le procédé comprenant les étapes consistant à :
déterminer un état de chacune de la pluralité d'interfaces réseau, où chacune de la pluralité d'interfaces réseau est en communication avec un prestataire de service de réseau ;
associer une table de routage à chacune des interfaces réseau, où la table de routage associée à l'interface réseau comprend un chemin pour acheminer un trafic de réseau depuis l'une de la pluralité d'interfaces réseau vers des prestataires de service de réseau ; et
attribuer un abonné à l'une de la pluralité de tables de routage au moins en partie sur la base d'une politique de routage et de l'état de chacune de la pluralité d'interfaces réseau, où la politique de routage inclut au moins un critère permettant de déterminer une attribution d'un abonné à l'une de la pluralité de tables de routage ;
**caractérisé par le fait que** le procédé comprend en outre :
le fait d'associer une pluralité de prestataires de service de réseau et chaque interface réseau à l'un de la pluralité de prestataires de service de réseau ; et
le fait d'équilibrer automatiquement l'attribution d'abonnés à la pluralité de prestataires de service de réseau au moins en partie sur la base de la politique de routage.

9. Procédé implémenté par ordinateur selon la revendication 8, comprenant en outre le fait de, lorsque l'état de l'interface réseau indique que le prestataire de service de réseau est indisponible, modifier les tables de routage associées à l'une de la pluralité d'interfaces réseau de sorte à acheminer le trafic de réseau vers un deuxième prestataire de service de réseau.

10. Procédé implémenté par ordinateur selon la revendication 8, comprenant en outre le fait de, lorsque l'état de l'une de la pluralité d'interfaces réseau indique que l'interface réseau est en panne, modifier les tables de routage associées à l'interface réseau de sorte à acheminer le trafic de réseau vers une autre interface réseau.

11. Procédé implémenté par ordinateur selon la revendication 8, dans lequel le fait de déterminer un état de chacune d'une pluralité d'interfaces réseau est réalisé de manière périodique.

12. Procédé implémenté par ordinateur selon la revendication 11, comprenant en outre le fait de réattribuer les abonnés à la pluralité de tables de routage lorsque l'état de l'une de la pluralité d'interfaces réseau évolue.

13. Procédé implémenté par ordinateur selon la revendication 8, comprenant en outre le fait de surveiller la disponibilité de réseau d'une interface réseau, comprenant :
le fait de solliciter un serveur depuis une interface réseau avec des données de vérification ;
le fait de déterminer si le serveur répond à la demande ;
le fait de définir l'état de l'interface réseau comme disponible si le serveur répond ; et
le fait de définir l'état de l'interface réseau comme indisponible si le serveur ne répond pas.
